(19) Europäisches Patentamt
European Patent Office
Office européen des brevets

(11) Publication number: **0 507 958 A1**

(12) **EUROPEAN PATENT APPLICATION published in accordance with Art. 158(3) EPC**

(21) Application number: **91918593.4**

(51) Int. Cl.5: **G06F 9/38**, G06F 9/28

(22) Date of filing: **25.10.91**

(86) International application number: **PCT/JP91/01460**

(87) International publication number: **WO 92/08190 (14.05.92 92/11)**

(30) Priority: **29.10.90 JP 288348/90**

(43) Date of publication of application: **14.10.92 Bulletin 92/42**

(84) Designated Contracting States: **DE FR GB**

(71) Applicant: **FUJITSU LIMITED**
**1015, Kamikodanaka Nakahara-ku**
**Kawasaki-shi Kanagawa 211(JP)**

(72) Inventor: **YOSHITAKE, Akihiro, Fujitsu Limited**
**1015, Kamikodanaka Nakahara-ku**
**Kawasaki-shi Kanagawa 211(JP)**

(74) Representative: **Billington, Lawrence Emlyn**
**Haseltine Lake & Co Hazlitt House 28,**
**Southampton Buildings Chancery Lane**
**London WC2A 1AT(GB)**

(54) **DEVICE FOR PROCESSING INFORMATION.**

(57) When a decoder (412; 63) for decoding the addressing field of an instruction outputs an indication of calculating addresses, in the case wherein a decoded instruction has both of an explicit indication of calculating addresses and an implicit indication of calculating addresses, the decoder (412; 63) determines, according to the instruction code, that either the explicit indication or the implicit one is to be performed in advance (Fig. 3A, Fig. 3B), and outputs those in order. Thereby, an instruction having an explicit indication of calculating addresses and an implicit one can be interpreted and executed at a high speed by an efficient pipeline processing.

EP 0 507 958 A1

Fig. 10

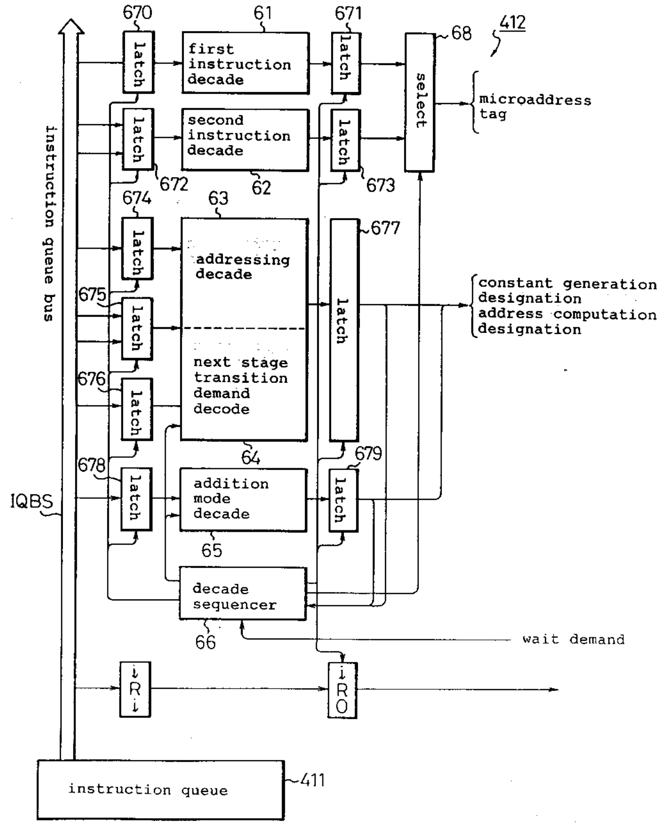
670
61
671
68
412
latch
first instruction decade
latch
select
microaddress tag
instruction queue bus
latch
second instruction decade
latch
672
62
673
674
63
677
latch
addressing decade
constant generation designation
address computation designation
675
latch
latch
676
next stage transition demand decode
latch
64
679
678
IQBS
latch
addition mode decade
latch
65
decade sequencer
66
wait demand
R
R O
instruction queue
411

## TECHNICAL FIELD

This invention relates generally to an information processing device. More in particular, it relates to an information processing device for interpreting/executing an instruction by a pipeline processing.

## BACKGROUND ART

To satisfy the demand for a higher operation speed of microprocessors, an information processing device for interpreting/executing an instruction by a pipeline processing has been provided in recent years. The instruction which is interpreted/executed by the pipeline processing in the information processing device includes an instruction that has an explicit address computation function and an implicit address computation function by an operation code. A high speed interpretation/execution of such an instruction having an explicit address computation function and an implicit address computation function by an efficient pipeline processing has been required recently. The explicit address computation function contains the address computation function in the instruction code itself. More specifically, the address computation is, for example, designated by an operand designation portion corresponding to an operation code. In the implicit address computation function, on the other hand, the address computation function is not clarified in the instruction code itself, but a hidden address computation is necessary in order to execute the instruction. More specifically the address computation function necessary for executing the operation code, for example, is hidden inside the operation code.

To speed up the execution speed of instructions, an information processing device for executing a parallel processing by a pipeline has conventionally been provided. This pipeline processing is based on the premise that the instructions are executed in regular order. In an information processing device for interpreting/executing an instruction string containing a PUSH-instruction and POP-instruction each having the explicit address computation function in the instruction and executing the implicit address computation function by the instruction code, for example, it has been difficult to efficiently carry out the pipeline processing of the instruction having both, the explicit and implicit, address computations. Here, the term "POP instruction" is the instruction that takes out (pops up) data from a stack inside a memory (see Figure 1A) and the term "PUSH instruction" is the instruction that loads (pushes) data into the stack in the memory (see Fig. 1B), on the contrary.

In the conventional information processing device as described above, the explicit address computation is designated by a decoder (particularly, an addressing decoder for decoding an addressing field), a microentry address is output by a decoder for decoding the instruction code portion and the microprogram is activated. Furthermore, the microprogram thus activated executes the implicit address computation and then executes the instruction. If the instruction is the PUSH instruction, the operand data by the explicit address computation are transferred to the address obtained by the implicit address computation, and if the instruction is the POP instruction, the operand data by the implicit address computation are transferred to the address obtained by the explicit address computation. In such a case, the conventional information processing device involves the problem that the execution step by the microprogram becomes a plurality of steps and the instruction cannot be executed at a high speed.

## DISCLOSURE OF THE INVENTION

It is an object of the present invention to provide an information processing device for interpreting and executing an instruction having an explicit address computation function and an implicit address computation function at a high operation speed by an efficient pipeline processing.

According to the present invention, there is provided an information processing device for interpreting and executing an instruction string containing an instruction having an explicit address computation function and having sometimes an implicit address computation function by an instruction code and a pipeline processing, wherein the information processing device includes a decoder for decoding the addressing field of the instruction, and if the instruction decoded by the decoder has both the explicit address computation function and the implicit address computation function, the decoder judges whether the explicit address computation function or the implicit address computation function should be executed first by the instruction code when the address computation function is output, and sequentially outputs the address computation function.

The information processing device is so constituted as to interpret/execute an instruction string containing a POP instruction or a PUSH instruction from/to a stack. When the POP instruction is interpreted and executed, the implicit address computation for a stack pointer may be first executed and then the explicit address computation designated by the addressing field of the POP instruction is executed. When the PUSH instruction is interpreted and executed, the explicit address computation designated by the addressing field of the PUSH instruction may be first executed and then the implicit address computation for the stack pointer is carried out. The microinstruction that is activated by the decoder can be constituted so that it is executed by the same microinstruction as an ordinary transfer instruction.

When the POP instruction is interpreted and executed, the implicit address computation is first executed if the operand designated by the addressing field of the POP instruction is a memory reference and thereafter the explicit address computation designated by the addressing field of this POP instruction is carried out. The construction may be so constituted as to execute only the implicit address computation for the stack pointer if the operand designated by the addressing field of the POP instruction is not the memory reference. When the destination designated by the addressing field of the POP instruction is a register, the construction can be so made as to execute only the implicit address computation for the stack pointer.

When the PUSH instruction is interpreted and executed, the explicit address computation is first executed if the operand designated by the addressing field of this PUSH instruction is the memory reference, and thereafter the implicit address computation for the stack pointer is executed. If the operand designated by the addressing field of the PUSH instruction is not the memory reference, the construction may be so made as to execute only the implicit address computation for the stack pointer. When the source designated by the addressing field of the PUSH instruction is a register or immediate (for example, immediate access storage), the construction can be so made as to execute only the implicit address computation for the stack pointer.

The information processing device described above can be constituted by five pipeline stages. The information processing device may also be constituted of a one-chip microprocessor equipped with an instruction control unit including the decoder described above and effecting the controls of fetch, decode and execution of the instruction, an instruction execution unit for executing the computation of the operand address and the operation of the operand, a memory control unit controlling the memories, and a bus control unit controlling the data transfer between an external I/O and the memories through a chip bus. The instruction control unit can be so constituted as to include a decoder for providing an instruction queue for prefetching the instruction and control data for the pipeline control, the operand address computation and the microprogram activation by analyzing the instruction format, kinds and addressing mode, a pipeline control unit for dividing the instruction into a predetermined number of independent stages in one machine cycle unit and controlling the pipeline processing and a microprogram storing therein microinstructions.

The decoder described above can be so constituted as to include a first instruction decoding unit, a second instruction decoding unit, an addressing decoding unit, a next stage transition demand decoding unit, an addition mode decoding unit, a decoding sequencer unit, a latch unit and a select unit. The addressing decoding unit may consist of a PLA and a plurality of logic gates so as to output various signals. The signals that the addressing decoding unit outputs include the signal representing the implicit address computation function and the signal representing the explicit address computation function, and may be so constituted as to represent by these signals whether or not the implicit address computation function exists, and to represent whether the explicit address computation function or the implicit address computation function should be executed first if the implicit address computation function exists.

According to the information processing device of the present invention described above, the decoder for decoding the addressing field of the instruction determines whether the explicit or implicit address computation functions is to be executed first, by the instruction when the decoded instruction has both the explicit and implicit address computation functions, and sequentially outputs these address computation functions. Accordingly, an instruction having the explicit and implicit address computations can be executed at a high speed.

In the case of the POP and PUSH instructions, for example, two address computations are executed in accordance with the instruction of the decoder. Therefore, the microinstruction needs to execute only the instruction and the microinstruction itself can be executed commonly with the POP and PUSH instructions and further with a MOV instruction.

BRIEF DESCRIPTION OF THE DRAWINGS

Figs. 1A and 1B are diagrams showing the operations of a POP instruction and a PUSH instruction in an information processing device;

Figs. 2A and 2B are diagrams showing an example of the execution sequences of the POP and PUSH instructions in the information processing device of the prior art;

Figs. 3A and 3B are diagrams showing an example of the execution sequences of the POP and PUSH instructions in the information processing device according to the present invention;

Figs. 4A and 4B are diagrams showing another example of the execution sequences of the POP and PUSH instructions in the information processing device according to the present invention;

Figs. 5A, 5B and 5C are diagrams showing the execution sequence of an instruction in the information processing device according to the present invention;

Fig. 6 is a block diagram showing the overall construction of an example of the information processing device according to the present invention;

Fig. 7 is a diagram showing an ordinary instruction execution sequence in the information processing device;

Figs. 8A, 8B and 8C are diagrams showing definite examples of instruction formats used in the information processing device according to the present invention;

Figs. 9A and 9B are diagrams showing the formats of the POP and PUSH instructions used in the information processing device according to the present invention;

Fig. 10 is a block diagram showing an example of a decoder applied to the information processing device according to the present invention;

Fig. 11 is a block circuit diagram showing the principal portions of an addressing decoding unit in the decoder shown in Fig. 10;

Fig. 12 is a block circuit diagram showing a decoding sequencer unit in the decoder shown in Fig. 10; and

Figs. 13A and 13B are decoding time charts of the POP and PUSH instructions in the information processing device according to the present invention, respectively.

BEST MODE FOR CARRYING OUT THE INVENTION

To begin with, the problems associated with the information processing device of the prior art will be explained with reference to Figs. 1A, 1B, 2A and 2B before the embodiments of the information processing device according to the present invention is described in detail.

Figs. 1A and 1B are diagrams showing the POP instruction and the PUSH instruction in the information processing device, respectively. Here, the POP instruction is the one that takes out data from a stack inside a memory and the PUSH instruction is the one that loads the stack with data inside the memory.

First of all, Fig. 1A shows the operation of the POP instruction in the information processing device and represents the case where the destination (dest) is a register or a memory and data are taken out from a stack. More definitely, a symbol "POP @ Rn" represents a memory reference by a register indirect mode, wherein the content (operand) of the position (Old SP) designated by a stack pointer SP in the stack is written into the address of the memory represented by a register Rn and the position designated by the stack pointer SP is shifted to a position (New SP) below the previous position (Old SP).

Next, Fig. 1B shows the operation of the PUSH instruction in the information processing device, and represents the case where a source (src) is a register, immediate or a memory, and the data are applied to the stack. More definitely, a symbol "PUSH @ Rn" represents the memory reference by the register indirect mode, wherein the content on the memory designated by the register Rn is given to the stack as the operand; the given operand is then written into a predetermined position above the position (Old SP) that has so far been designated by the stack pointer SP, for example, and this new position (New SP) is designated by the stack pointer SP. Here, these POP and PUSH instructions are generally allocated as instruction codes that a CPU interprets.

Figs. 2A and 2B show the sequences in which the POP instruction and the PUSH instruction such as shown in Figs. 1A and 1B are executed in the conventional information processing device, and the drawings represent the operation of five-stage pipelines.

In the execution sequence by the POP instruction shown in Fig. 2A, the instruction decoding (DC) is carried out in the first cycle C1, the explicit address computation (AC1) designated by the addressing field of the POP instruction is carried out in the second cycle C2, and a first step readout (Mi1) of the microinstruction is carried out in the third cycle C3. Furthermore, the second step readout (Mi2) of the microinstruction is carried out in the fourth cycle and at the same time, the implicit address computation (AC2) is carried out by the designation from the first step readout Mi1 of the microinstruction. The third step readout (Mi3) of the microinstruction is carried out in the fifth cycle C5 and at the same time, operand fetch (OF2) is carried out by the implicit address computation in accordance with the designation from the second step readout Mi2 of the microinstruction. The execution of the instruction (write designation to the explicit address computation address: OE3) is carried out in the sixth cycle C6 in accordance with the designation from the third step readout Mi3 of the microinstruction, and the write execution (OW3) to the explicit address computation address is carried out in the seventh cycle C7.

In the execution sequence by the POP instruction shown in Fig. 2A, the next instruction is started from the fifth cycle C5. When the POP instruction is executed from the first cycle C1, therefore, it has not been possible to start the execution of the next instruction before the fifth cycle C5 after the four cycles from the first cycle C1. The execution sequence shown in Fig. 2A represents the case that the destination is the memory, but in the case of the register, it has also not been possible to start the next instruction before the fifth cycle C5.

In the execution sequence by the PUSH instruction shown in Fig. 2B, the instruction decoding (DC) is carried out in the first cycle C1, the explicit address computation (AC1) is carried out in the second cycle C2 and the first step readout (Mi1) of the microinstruction is carried out in the third cycle C3, and at the same time operand fetch (OF1) by the explicit address computation is carried out. Furthermore, the second step readout (Mi2) of the microinstruction is carried out in the fourth cycle C4, and at the same time the implicit address computation (AC2) is carried out by the designation from the first step readout Mi1 of the microinstruction. The execution of the instruction (write instruction to the implicit address computation address: OE2) is carried out in the fifth cycle C5 in accordance with the designation from the second step readout Mi2 of the microinstruction and the write execution (CW2) to the implicit address computation address is carried out in the sixth cycle C6.

In this execution sequence by the PUSH instruction shown in Fig. 2B, the next instruction is started from the fourth cycle. If the PUSH instruction is executed from the first cycle C1, it has not been possible to start the next instruction before the fourth cycle C4 after three cycles from the first cycle C1.

As described above, in the conventional information processing device, the explicit address computation is designated by the decoder (particularly, by the addressing decoder for decoding the addressing field); the decoder for the instruction code portion outputs the micro-entry address and the microprogram is activated by this output. Furthermore, the activated microprogram executes the implicit address computation and then executes the instruction. (In the case of the PUSH instruction, the operand data by the explicit address computation are transferred to the address by the implicit address computation, and in the case of the POP instruction, the operand data by the implicit address computation are transferred to the address by the explicit address computation.) In such a case, the execution step by the microprogram becomes a plurality of steps in the conventional information processing device, and there remains the problem that the instruction cannot be executed at a high speed.

Hereinafter, preferred embodiments of the information processing device according to the present invention will be explained in detailed with reference to the drawings.

Figs. 13A and 13B show an example of the execution sequences of the POP and PUSH instructions in the information processing device according to the present invention, and represent the operation in the five-stage pipeline. Here, Figs. 3A and 3B show the case that the destination and the source are the memory.

When the destination is the memory as shown in Fig. 3, the execution sequence of the POP instruction is, for example, as follows. The instruction decoding (DC) is carried out in the first cycle C1; the implicit address computation (AC1) is carried out in the second cycle C2; the explicit address computation (AC2) is carried out in the third cycle C3, and at the same time the operand fetch (OF1) by the implicit address computation is carried out. Furthermore, readout of the microinstruction (Mi) is carried out in the fourth cycle C4 and the check of the write right (WA2) by the explicit address computation is carried out. The execution of the instruction (OE: the transfer of the source (implicit access)) to the destination (explicit access) is carried out in the fifth cycle C5 and the execution of write (OW) of the destination is carried out in the sixth cycle C6.

In other words, when the POP instruction is interpreted and executed, the implicit address computation (AC1) for the stack pointer is first executed if the operand designated by the addressing field of the POP instruction is the memory reference, and thereafter the explicit address computation (AC2) designated by the addressing field of the POP instruction is carried out and the microinstruction activated by the decoder is executed by the same microinstruction as the ordinary transfer instruction.

In the execution sequence by the POP instruction shown in Fig. 3A, the next instruction is started from the third cycle C3. Accordingly, when the POP instruction is executed from the first cycle C1, the next instruction is started from the third cycle C3 after the two cycles from the first cycle C1, and the execution start of the next instruction can be shortened by two cycles in comparison with the execution by the conventional information processing device shown in Fig. 2A.

When the source is the memory as shown in Fig. 3B, the execution sequence of the PUSH instruction is, for example, as follows. The instruction decoding (DC) is carried out in the first cycle C1; the explicit address computation (AC1) is carried out in the second cycle C2, and the implicit address computation (AC2) is carried out in the third cycle C3, and at the same time the operand fetch (OF1) by the explicit address computation is carried out. Furthermore, readout (Mi) of the microinstruction is carried out in the fourth cycle C4 and the check of the write right (WA2) by the implicit address computation is carried out. The execution of the instruction (OE: transfer of the source (explicit access) to the destination (implicit access) is carried out in the fifth cycle C5, and the write execution (OW) of the destination is carried out in the sixth cycle C6.

In other words, when the PUSH instruction is interpreted and executed, the implicit address computation (AC1) designated by the addressing field of this PUSH instruction is first executed if the operand designated by the PUSH instruction is the memory reference, and thereafter the implicit address computation (AC2) for the stack pointer is carried out and the microinstruction activated by the decoder is executed by the same microinstruction as the ordinary transfer instruction.

In the execution sequence by the PUSH instruction shown in Fig. 3B, the next instruction is started from the third cycle C3. Accordingly, when the PUSH instruction is executed from the first cycle C1, the next instruction is started from the third cycle C3 after two cycles from the first cycle C1. Therefore, the execution start of the next instruction can be shortened by one cycle in comparison with the case of the conventional information processing device shown in Fig. 2B.

Figs. 4A and 4B show another example of the execution sequences of the POP and PUSH instructions in the information processing device according to the present invention, and represent the operations in the five-stage pipeline. Here, Figs. 4A and 4B show the case that the destination and the source are the register.

When the destination is the register as shown in Fig. 4A, the execution sequence by the POP instruction is, for example, as follows. The instruction decoding (DC) is carried out in the first cycle C1; the implicit address computation (AC) is carried out in the second cycle C2, and readout of the microinstruction (Mi) is carried out in the third cycle, and at the same time the operand fetch (OF) by the implicit address computation is carried out. The execution of the instruction (OE: transfer of the source (implicit access) to the destination) is carried out in the fourth cycle C4, and the write execution (OW: to the register) of the destination is carried out in the fifth cycle C5.

In other words, when the POP instruction is interpreted and executed, only the implicit address computation (AC) for the stack pointer is carried out if the operand designated by the addressing field of the POP instruction is not the memory reference, such as when the destination is the register.

In the execution sequence by the POP instruction shown in Fig. 4A, the next instruction is started from the second cycle C2. Therefore, when the POP instruction is executed from the second cycle C2, the next instruction is started from the second cycle C2 immediately after the first cycle. Accordingly, the execution start of the next instruction can be shortened by three cycles in comparison with the case of the conventional information processing device shown in Fig. 2A.

When the source is the register or immediate as shown in Fig. 4B, the execution sequence by the PUSH instruction is as follows, for example. The instruction decoding (DC) is carried out in the first cycle C1; the implicit address computation (AC) is carried out in the second cycle C2, and readout (Mi) of the microinstruction is carried out in the third cycle C3, and at the same time the check of the write right (WA) by the implicit address computation is carried out. The execution of the instruction (OE: transfer of the source (register or immediate) to the destination (implicit access)) is carried out in the fourth cycle C4, and the write execution (OW) of the destination is carried out in the fifth cycle C5.

In other words, when the PUSH instruction is interpreted and executed, only the implicit address computation (AC) is carried out if the operand designated by the addressing field of the PUSH instruction is not the memory reference, such as when the source is the register or immediate.

In the execution sequence by the PUSH instruction shown in Fig. 4B, the next instruction is started from the second cycle C2. Accordingly, when the PUSH instruction is executed from the first cycle C1, the next instruction is started from the second cycle C2 immediately after the first cycle C1. Therefore, the execution start of the next instruction can be shortened by two cycles in comparison with the case of the conventional information processing device shown in Fig. 2B.

Figs. 5A, 5B and 5C show the execution sequences of one instruction in the information processing device according to the present invention. Fig. 5A shows the execution sequence of a MOVE instruction (memory register), Fig. 5B shows the execution sequence of a MOVE instruction (register memory) and Fig. 5C shows the execution sequence by the MOVE instruction (memory memory).

As can be understood by comparing Figs. 5A - 5C with Figs. 1A, 1B and 2A, 2B, the information processing device according to the present invention can accomplish the execution sequences of the POP and PUSH instructions, which have been explained with reference to Figs. 1A, 1B and 2A, 2B, by the pipeline stage similar to that of the execution sequence of the ordinary transfer instruction (MOVE instruction).

In other words, the MOVE instruction (memory register) shown in Fig. 5A is similar to the execution sequence by POP Rn ("POP @ Rn"), the execution sequence by the MOVE instruction (register memory) is similar to the execution sequence by PUSH Rn ("PUSH @ Rn") or PUSH immediate ("PUSH @ immediate") shown in Fig. 4B, and the execution sequence by the MOVE instruction (memory memory) in Fig. 5C is similar to the execution sequence by the POP instruction and the PUSH instruction (memory) in Figs. 3A and 3B. It can thus be understood that the unnecessary stage (overhead) in the pipeline can be reduced.

Fig. 6 is a block diagram showing the overall construction of an example of the information processing device according to the present invention. As shown in the drawing, the information processing device includes an instruction control unit 41, an instruction execution unit 42, a memory control unit 43 and a bus control unit 44. The instruction control unit 41, instruction execution unit 42, memory control unit 43 and bus control unit 44 can be integrated into one chip. In other words, the information processing device according to the present invention can be constituted as a one-chip microprocessor including the instruction control unit 41, the instruction execution unit 42, the memory control unit 43 and the bus control unit 44.

The instruction control unit 41 effects controls for the instruction fetch, decoding and execution, and includes an instruction queue 411, a decoder 412, a pipeline control unit 413 and a microprogram 414. The instruction queue 411 efficiently processes a variable length instruction, and instruction prefetch is continued until free space no longer exists in the instruction queue 411. The instruction prefetch is carried out independently of the instruction execution. The instruction decoder 412 analyzes the instruction format and kind, the addressing mode, and control data for pipeline control; the operand address computation and the activation of the microprogram are given thereto. The pipeline control unit 413 divides the instruction into five stages that are independent in the unit of one machine cycle, and executes continuous processing (pipeline processing).

The instruction execution unit 42 makes the computation of the operand address and the computation of the operand, and includes an address generation portion 421, a register file 422 and a computation unit 423. The address generation unit 421 makes the address computation in accordance with the addressing mode, and the address thus generated is supplied to the memory control unit 43. The register file 422 includes a general purpose register, a stack pointer and a work register. Besides the basic computation, the computation unit 423 includes a circuit for efficiently accomplishing a bit field operation instruction, a multiplication/division instruction and a decimal computation reinforcing instruction, and processes the operand by the control data from the microprogram 414.

The memory control unit 43 consists of an instruction access control unit 431 and an operand access control unit 432, each having a cache memory, TLB and memory protection check function, and so constituted as to independently operate in accordance with the activation from the instruction control unit 41. The write operation of the data by the instruction execution is carried out in a store-through system, and when a chip bus is in use, the address and the data are preserved in a store buffer until data delivery becomes possible.

The bus control unit 44 controls the data transfer with an external I/O and memory through the chip bus, through a data transfer/reception portion 443. Furthermore, it has a block access function for transferring one block to the cache memory at a high speed (bus monitor control unit 442) and an address monitor function (address control unit 441) for monitoring the write address on the chip bus in order to establish a coincidence with the external memory.

Fig. 7 shows the ordinary instruction execution sequence in the information processing device. As shown in the drawing, the information processing device to which the present invention is applied consists of a five-stage pipeline process. In the ordinary instruction execution sequence, the instruction decoding stage (DC), the operand address computation stage (AC), the microprogram readout and operand fetch stage (Mi), the instruction execution stage (OE: computation stage) and the operand write stage (OW: result write stage) are pipeline-processed to execute a given instruction. In other words, in the case of ordinary instruction execution, the address computation is carried out at the AC stage by the addressing data obtained as a result of decoding, the access of the operand data is carried out at the Mi stage, the microaddress is output at the Mi stage, and the microprogram is read out at the OE stage so as to control the OW stage.

Figs. 8A, 8B and 8C show definite examples of the instruction formats used in the information processing device of the present invention. As shown in Figs. 8A to 8C, the instruction which is to be interpreted and executed by the information processing device of the present invention consists, of for example, a general format that is referred to as a "G format", and a compacted format that is compacted so that an instruction having a high frequency of use and an addressing mode become a short instruction.

Here, the general format is divided into a one-operand format (G1 format) having one operand such as the POP instruction and the PUSH instruction, a two-operand format (G2 format) including a majority of instructions such as the MOVE instruction and the ADD instruction, and an extended operand format having three or more operands such as a fixed length bit field instruction and loop instructions referred to as "ACB" and "SCB". The compacted format is allocated to the instructions of the general format having a high frequency of use and the addressing mode among the instructions of the general format so that they become short instructions. The compacted format is mainly divided into the operand between the memory and the register and the operand between the register and the register.

Among the instruction formats, the operand designation portion is capable of the addressing designation as shown in Fig. 8B, and the addressing mode referred to as an "addition mode" is the addressing mode that can use a multilevel address and scaling. The operand address can be obtained basically by the following formula:

"base address + index $\times$ scale + displacement"

When this address computation is repeatedly applied, the multilevel address can be accomplished. Accordingly, the base address of the first stage is designated by the operand designation portion, and the index, the scale and the displacement are connected to the extended portion and designated for each stage by the format shown in Fig. 8C.

Figs. 9A and 9B show the formats of the POP instruction and PUSH instruction used for the information processing device of the present invention. As shown in Fig. 9A, the POP instruction makes the post-increment of the stack pointer (SP) and transfers the data of the stack to the operand designated by the addressing field. As shown in Fig. 9B, on the other hand, the PUSH instruction makes the pre-decrement of the stack pointer and transfers the operand designated by the addressing field to the stack. In this embodiment, both the POP instruction and the PUSH instruction can of course designate the memory to the operand.

Accordingly, when the operand is the memory reference as shown in Figs. 1A, 1B and 2A, 2B, the address computation is made twice and when the operand is not the memory reference (but is the register or immediate), the address computation is made once.

In this embodiment, when the instruction is the POP instruction, the computation of the stack pointer corresponding to the source operand (the implicit address computation for the stack pointer) is first made and then the address computation by addressing (the explicit address computation designated by the addressing field) is carried out. When the instruction is the PUSH instruction, the address computation by addressing (the explicit address computation designated by the addressing field of the PUSH instruction) is first made and then the computation of the stack pointer corresponding to the destination operand (the implicit computation for the stack pointer) is carried out. When the addressing is other than the memory in both of these POP and PUSH instructions, only the computation of the stack pointer (the implicit address computation for the stack pointer) is carried out.

Fig. 10 is a block diagram showing an example of the decoder that is applied to the information processing device of the present invention. In this drawing, the decoder 412 decodes an instruction string consisting of the instruction formats shown in Figs. 8A to 8C in the 16-bit unit as the unit length, and the instruction string is supplied through the instruction queue 411. The decoder 412 decodes the format and addressing mode of the supplied instruction, and provides the control data such as the pipeline control, the operand address computation and the microprogram address.

As shown in Fig. 10, the decoder 412 includes, for example, a first instruction decoding unit 61, a second instruction decoding unit 62, an addressing decoding unit 63, a next stage transition demand decoding unit 64, an addition mode decoding unit 65, a decoding sequencer unit 66, latch units 670 - 679 and a select unit 68. A symbol IQBS represents an instruction queue bus.

The instruction code decoded by the instruction decoder 412 uses 16 bits as the basic length and comprises a basic format determined by maximum three basic unit 1 instructions. The basic units are called OP1 to OP3 sequentially from the first 16 bits, and the instruction code has an extended portion that is added in accordance with the mode designated by the basic unit. Here, the extended portion is an immediate mode, a displacement mode or an addition mode. Since the instruction has a variable length, the decoder 412 divides the instruction into its constituent elements and decodes in accordance with the stage of the sequencer.

The addressing decoding unit 63 as the gist of the present invention in Fig. 10 is shown in Fig. 11 and the decoding sequencer unit 66 is shown in Fig. 10.

Fig. 11 is a block circuit diagram showing the principal portions of the addressing decoding unit in the decoder shown in Fig. 10. The addressing decoding unit 63 comprises a PLA 631 and a plurality of logic gates, and outputs various kinds of signals. Here, the output signal AAFSL represents a register indirect designation, DSPSZ16 represents a 16-bit displacement designation, DSPSZ32 represents a 32-bit displacement designation, APCSL represents a program counter relative designation, ASPSL represents a stack pop or stack push, ASPDEC represents the address computation of the stack push, and ASPDEC represents the address computation of the stack push. In the case of the 16-bit register relative indirect address, for example, AAFSL and DSPSZ16 are asserted.

On the other hand, signals SPSLi1 and SPSLi2 in Fig. 11 represent the implicit address computation designations. Their difference resides in the priority of the explicit address computation. In other words, the implicit address computation is prior to the explicit address computation in the signal SPSLi1 while the latter is prior to the former in the signal SPSLi2.

Furthermore, a signal MEMSL represents that the memory is designated in the addressing field and that the explicit address computation is carried out. These signals SPSLi1, SPSLi2, MEMSL represent whether or not the implicit address computation designation exists, and whether the explicit address computation designation or the implicit address computation designation is made first if the implicit address computation designation exists.

Fig. 12 is a block circuit diagram showing the decoding sequencer unit 66 of the decoder shown in Fig. 10. As shown in the diagram, the decoding sequencer unit 66 comprises a plurality of logic gates and latch circuits, and can assume the following seven states (1) - (7).

| | |
|---|---|
| (1) OP1 | a stage where decoding is made from the leading part of the instruction. |
| (2) OP2 | a stage where decoding of the second basic portion (OP2) of the instruction is made. |
| (3) OP3 | a stage where decoding of the third basic portion (OP3) of the instruction is made. |
| (4) ADDM | decoding stage of the addition mode. |
| (5) iMM2 | a stage where the second word of the immediate data of the long data is taken out. |
| (6) iMM3 | a stage where the third word of the immediate data of the long data is taken out. |
| (7) ACWAit | a stage where the second address computation designation is made to effect a two addressing mode computation for decoding one cycle. |

Figs. 13A and 13B show the decoding time charts of the POP instruction and the PUSH instruction in the information processing device according to the present invention. Fig. 13A shows the decoding time chart of POP @(Ro:B, R1:X, disp:32) and Fig. 13B shows the decoding time chart of PUSH @(Ro:B, R1:X, disp:32).

First of all, as shown in Fig. 13A, when POP @(Ro:B, R1:X, disp:32) is executed, the SPSLi1 signal and the MEMSL signal are definitely asserted by the three signals, i.e. the SPSLi1 signal, the SPSLi2 signal and the MEMSL signal in the addressing decoding unit 63, and represent that there are the explicit address computation designation add the implicit address computation designation, and that the implicit address computation designation is prior to the explicit address computation. The arithmetic instruction is given so that the decoding sequencer unit 66 executes "OP1 → ACWAiT → ADDM →" among the seven states (1) - (7) described already. In other words, in the case of the memory designation by the POP instruction, for example, the SPSLi1 signal and the MEMSL signal are asserted, the arithmetic instruction of the stack pop is first made at the OP1 stage and thereafter the address computation designation (the address computation designation by the addition mode) of @(Ro:B, R1:X, disp:32) is effected at the ACWAiT stage and the ADDM stage.

When PUSH @(Ro:B, R1:X, disp:32) is executed as shown in Fig. 13B, the SPSLi2 signal and the MEMSL signal are definitely asserted by the three signals, i.e. the SPSLi1 signal, the SPSLi2 signal and the MEMSL signal in the addressing decoding unit 63, and they represent that the explicit address designation and the implicit address computation designation exist and that the explicit address is prior to the implicit address computation designation. The arithmetic designation is made so that the decoding sequencer unit 66 executes "OP1 → ADDM → ACWAiT →" among the seven states described above. In other words, the address computation designation (the address computation designation of the addition mode) of @(Ro:B, R1:X, disp:32) is effected at the OP1 and ADDM stages and thereafter the computation designation of the stack push is effected at the ACWAiT stage.

In the operation described above, the microinstruction address output from the instruction decoding unit is the same as the ordinary transfer instruction (the MOVE instruction), for example, as already described. Since the address computation of the instruction having both the explicit and implicit address computations is output by calculating the priority by the decoder, performance can be improved, and since the subsequent stages are made to be common, there is a reduction of necessary hardware.

As described above in detail, the information processing device according to the present invention determines whether the explicit or the implicit address computation designations is to be first made, so that the instruction having the explicit address computation designation and the implicit address computation designation can be interpreted and executed at a high speed by an efficient pipeline processing.

| Table of Reference Numerals | |
|---|---|
| 41 | instruction control unit |
| 42 | instruction execution unit |
| 43 | memory control unit |
| 44 | bus control unit |
| 61 | first instruction decoding unit |
| 62 | second instruction decoding unit |
| 63 | addressing decoding unit |
| 64 | next stage transition demand decoding unit |
| 65 | addition mode decoding unit |
| 66 | decoding sequencer unit |
| 670 - 679 | latch |
| 68 | selecting unit |
| 411 | instruction queue |
| 412 | decoder |
| 413 | pipeline control unit |

**Claims**

1. An information processing device for interpreting and executing an instruction string containing an instruction that has an explicit address computation designation and may have an implicit address computation designation by an instruction code and a pipeline processing, characterized in that,
   said information processing device includes a decoder (412, 63) for decoding an addressing field of said instruction decoder (412, 63); and said decoder determines whether said explicit address computation designation or said implicit address computation designation should be made first by an instruction code when said decoder outputs the address computation designation if the decoded instruction has both said explicit address computation designation and said implicit address computation designation, and sequentially outputs said address computation designations.

2. An information processing device according to claim 1, wherein said information processing device is so constituted as to interpret and execute an instruction string containing a POP instruction, and when said POP instruction is interpreted and executed, said information processing device executes first said implicit address computation for a stack pointer and then executes said explicit address computation (Fig. 3A) designated by the addressing field of said POP instruction.

3. An information processing device according to claim 2, wherein a microinstruction activated by said decoder is executed by the same microinstruction as an ordinary transfer instruction.

4. An information processing device according to claim 1, wherein said information processing device is so constituted as to interpret and execute an instruction string containing a PUSH instruction for a stack, and when said PUSH instruction is interpreted and executed, said information processing device first executes said explicit address computation designated by the addressing field of said PUSH instruction and then executes said implicit address computation for a stack pointer (Fig. 3B).

5. An information processing device according to claim 4, wherein a microinstruction activated by said decoder is executed by the same microinstruction as an ordinary transfer instruction.

6. An information processing device according to claim 1, wherein said information processing device is so constituted as to interpret and execute an instruction string containing a POP instruction for a stack; when said POP instruction is interpreted and executed, said information processing device first executes said implicit address computation for said stack pointer when the operand designated by the addressing field of said POP instruction is a memory reference and then executes said implicit address computation designated by the addressing field of said POP instruction (Fig. 3A); and when the operand designated by the addressing field of said POP instruction is not the memory reference, said information processing device executes only said implicit address computation for said stack pointer (Fig. 4A).

**7.** An information processing device according to claim 6, wherein said information processing device executes only said implicit address computation for said stack pointer when the destination designated by the addressing field of said POP instruction is a register.

**8.** An information processing device according to claim 1, wherein said information processing device is so constituted as to interpret and execute an instruction string containing a PUSH instruction for a stack; when said PUSH instruction is interpreted and executed, said information processing device first executed said explicit address computation when the operand designated by the addressing field of said PUSH instruction is a memory reference, and then executes said implicit address computation for said stack pointer (Fig. 3B); and when the operand designated by the addressing field of said PUSH instruction is not the memory reference, said information processing device executes only said implicit address computation for said stack pointer (Fig. 4B).

**9.** An information processing device according to claim 8, wherein said information processing device executes only said implicit address computation for said stack pointer when the source designated by the addressing field of said PUSH instruction is a register or immediate.

**10.** An information processing device according to claim 8, which is constituted by a five-stage of pipeline process.

**11.** An information processing device according to claim 1, wherein said information processing device includes a decoder (412, 63), and is constituted as a one-chip microprocessor including an instruction control unit (41) for making controls for instruction fetch, decoding and execution, an instruction execution unit (42) for effecting the computation of an operand address and the computation of an operand, a memory control unit (43) for controlling memories, and a bus control unit (44) for controlling data transfer with external I/O and memories through a chip bus.

**12.** An information processing device according to claim 11, wherein said instruction control unit (41) includes an instruction queue (411) for pre-fetching instructions, a decoder (412) for providing control data for the pipeline control, the operand address computation and the activation of the microprogram by analyzing the instruction format and kind and the addressing mode, a pipeline control unit (413) for dividing an instruction into a predetermined number of stages independent in one machine cycle, and controlling the pipeline processing, and a microprogram (414) for storing therein the microinstruction.

**13.** An information processing device according to claim 12, wherein said decoder (412) includes a first instruction decoding unit (61), a second instruction decoding unit (62), an addressing decoding portion (63), a next stage transition demand decoding unit (64), an addition mode decoding unit (65), a decoding sequencer unit (66), latch units (670 - 679) and a select unit (68).

**14.** An information processing device according to claim 13, wherein said addressing decoding unit (63) comprises a PLA (631) and a plurality of logic gates, and outputs various kinds of signals.

**15.** An information processing device according to claim 14, wherein the signals output by said addressing decoding unit (63) include signals representing said implicit address computation designation (SPSLi1, SPSLi2) and said explicit address computation designation (MEMSL), and these signals (SPSLi1, SPSLi2, MEMSL) represent whether or not said implicit address computation designation exist and whether said implicit address computation designation or said explicit address computation designation is to be made first.

Fig.1A

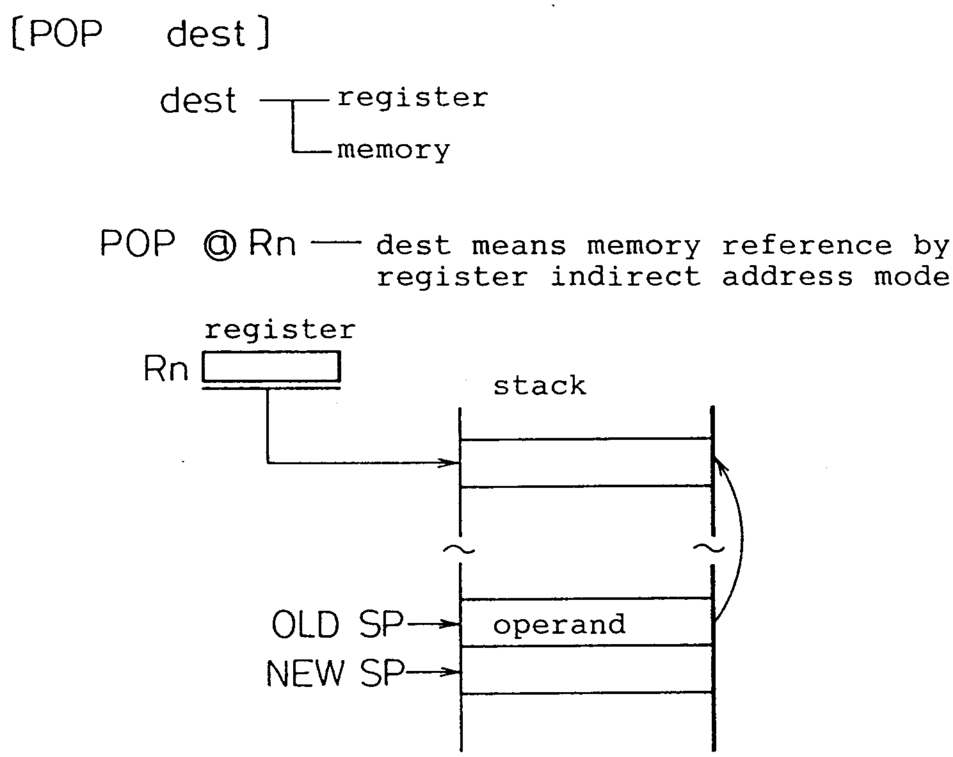
[POP dest]
dest
register
memory
POP @Rn
dest means memory reference by register indirect address mode
register
Rn
stack
OLD SP
operand
NEW SP

Fig.1B

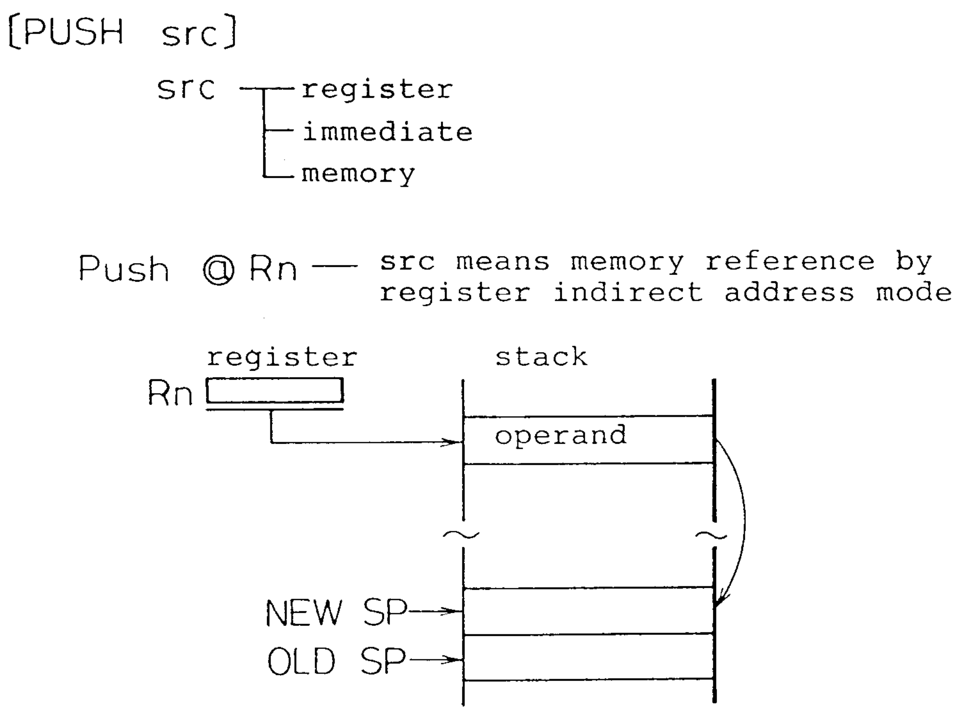
[PUSH src]
src
register
immediate
memory
Push @Rn
src means memory reference by register indirect address mode
register
stack
Rn
operand
NEW SP
OLD SP

Fig. 2A (prior art)

[POP instruction]

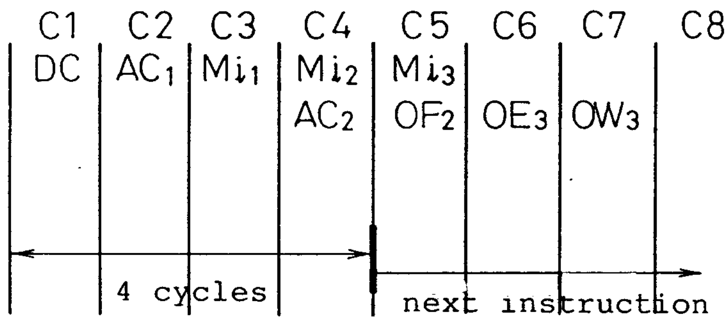


Fig. 2B (prior art)

[PUSH instruction]

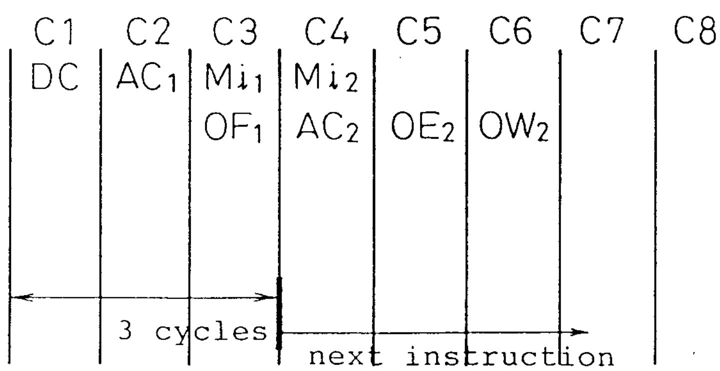

Fig. 3A

[POP instruction]

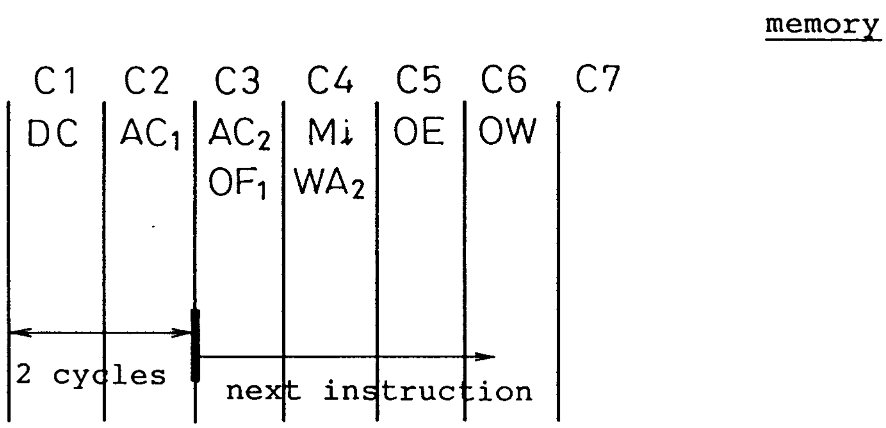


Fig. 3B

[PUSH instruction]

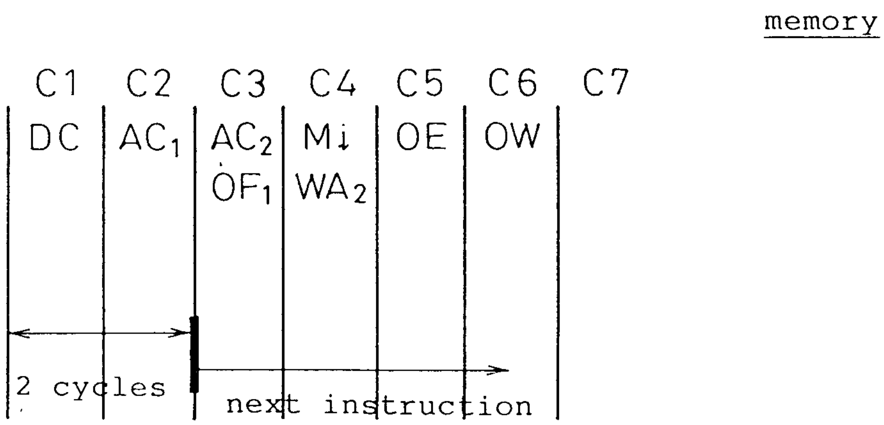

Fig. 4A

[POP Rn]

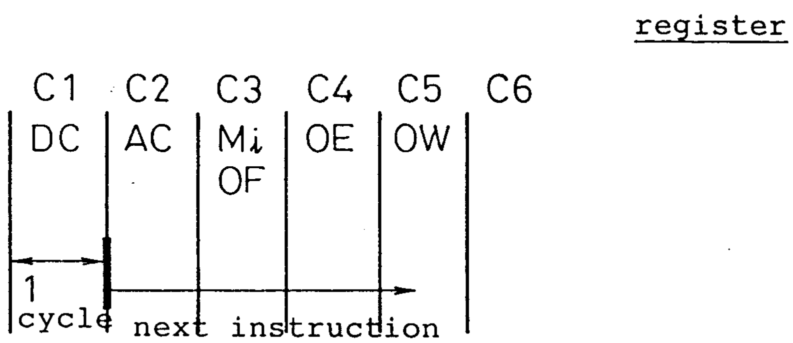


Fig. 4B

[PUSH Rn or PUSH(immediate)]

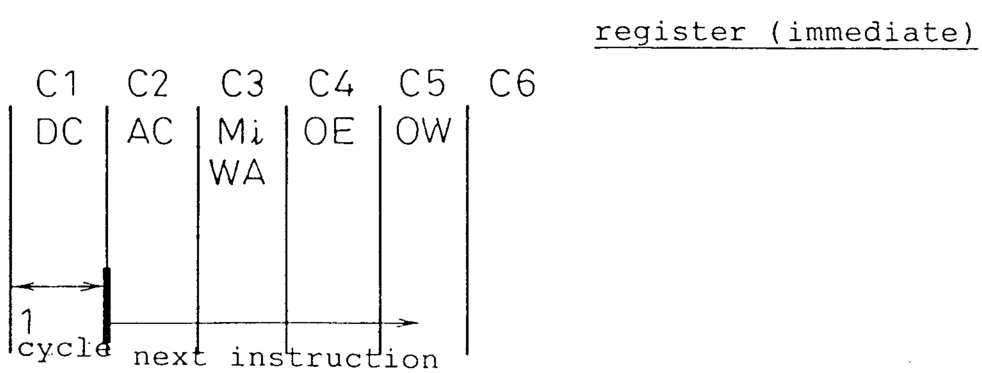

Fig. 5A

[MOV instruction (memory→register)]

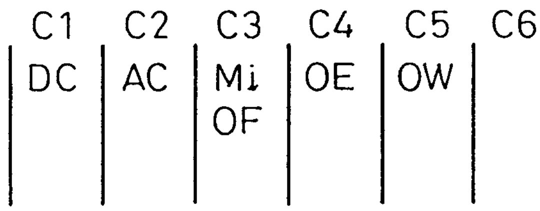


Fig. 5B

[MOV instruction (register→memory)]

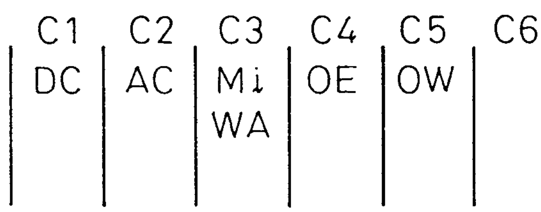


Fig. 5C

[MOV instruction (memory→memory)]

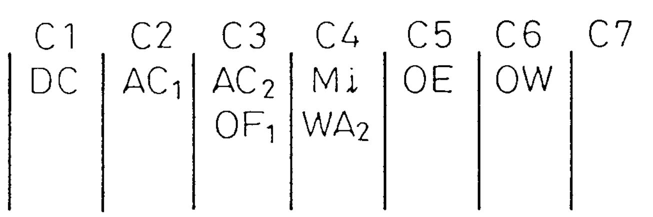

Fig. 6

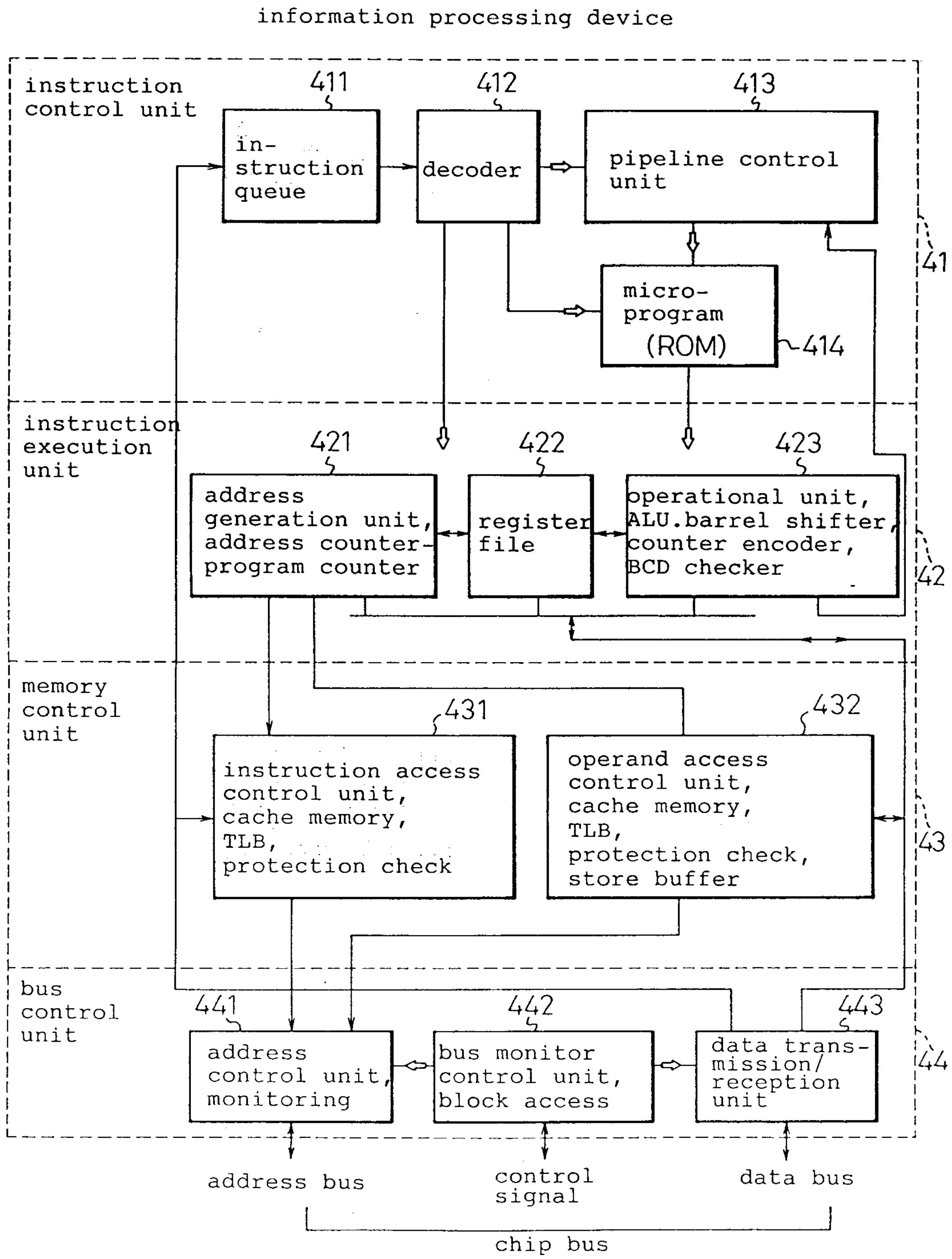
information processing device
instruction control unit
411
412
413
in-struction queue
decoder
pipeline control unit
41
micro-program (ROM)
414
instruction execution unit
421
422
423
address generation unit, address counter-program counter
register file
operational unit, ALU.barrel shifter, counter encoder, BCD checker
42
memory control unit
431
432
instruction access control unit, cache memory, TLB, protection check
operand access control unit, cache memory, TLB, protection check, store buffer
43
bus control unit
441
442
443
address control unit, monitoring
bus monitor control unit, block access
data trans-mission/ reception unit
44
address bus
control signal
data bus
chip bus

# Fig. 7

| | | | | | | | | | |
|---|---|---|---|---|---|---|---|---|---|
| instruction 1 | DC | AC | M↓ | OE | OW | | | | |
| instruction 2 | | DC | AC | M↓ | OE | OW | | | |
| instruction 3 | | | DC | AC | M↓ | OE | OW | | |
| instruction 4 | | | | DC | AC | M↓ | OE | OW | |
| instruction 5 | | | | | DC | AC | M↓ | OE | OW |

Fig. 8A

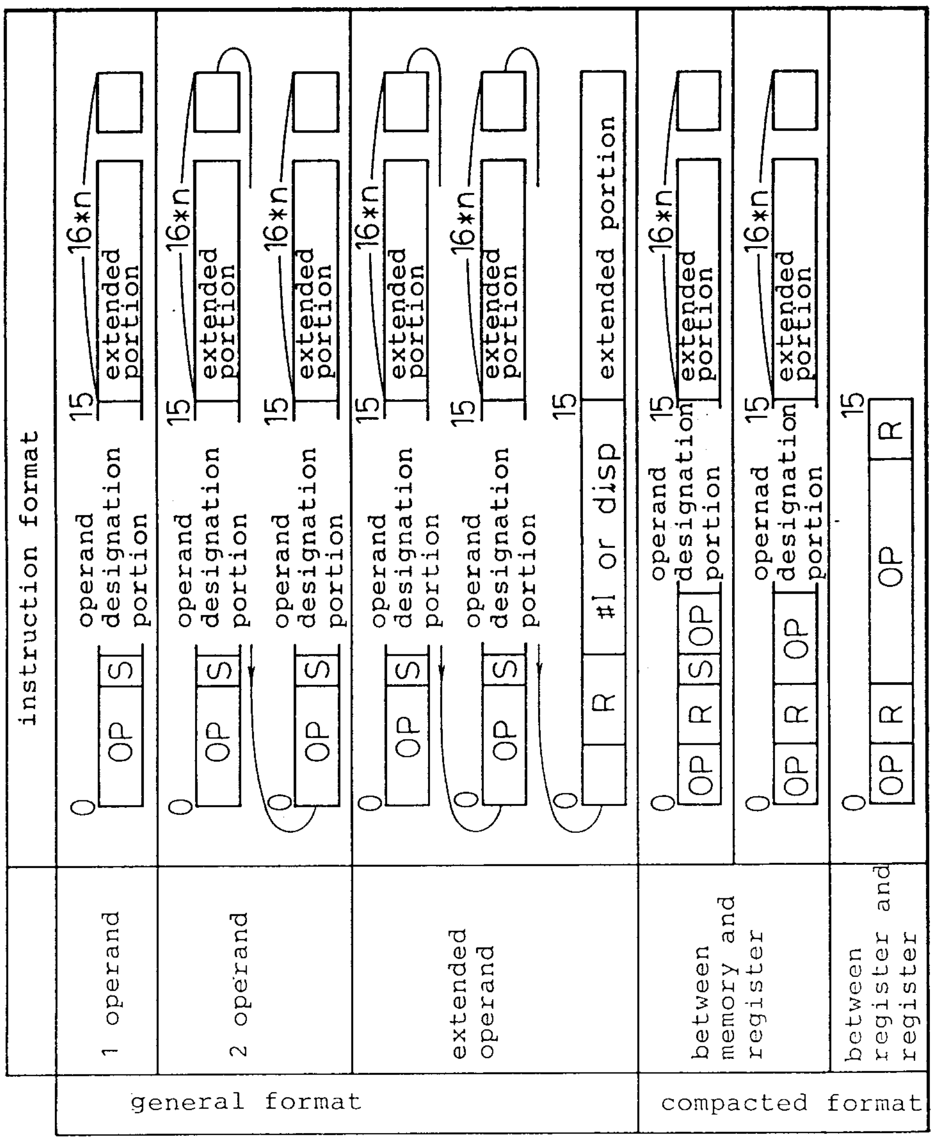
instruction format
general format
1 operand
2 operand
extended operand
compacted format
between memory and register
between register and register
OP
S
R
operand designation portion
openad designation portion
extended portion
#I or disp
0
15
16*n

# Fig. 8B

| Fig. 8B-1 |
|---|
| Fig. 8B-2 |

# Fig. 8B-1

| operand designation portion | extended portion | assembler description | name of addressing mode |
|---|---|---|---|
| 0000 0000 | — | — | reserve |
| 0000 0001 | — | — | reserve |
| 0000 0010 | — | — | reserve |
| 0000 0011 | — | — | reserve |
| 0000 0100 | — | @SP+ | stack POP |
| 0000 0101 | — | @-SP | stack PUSH |
| 0000 0110 | — | — | reserve |
| 0000 0111 | — | — | reserve |
| 0000 1000 | — | — | reserve |
| 0000 1001 | 16-bit address | @exp:16 | 16-bit absolute |
| 0000 1010 | 32-bit address | @exp:32 | 32-bit absolute |
| 0000 1011 | multi-level indirect mode designation | -- (--) | absolute multi-level indirect |
| 0000 1100 | immediate | #exp | immediate |
| 0000 1101 | 16-bit displacement | @(exp:16,PC) | 16-bit PC relative indirect |
| 0000 1101 | 32-bit displacement | @(exp:32,PC) | 32-bit PC relative indirect |
| 0000 1111 | multi-level indirect mode designation | @--@(PC--) | PC base multi-level indirect |
| 0001 XXXX | — | Rn | register indirect |

# Fig. 8B-2

| | | | |
|---|---|---|---|
| 0010 XXXX | 16-bit displacement | @(exp:16,Rn) | 16-bit register relative indirect |
| 0011 XXXX | — | @Rn | register indirect |
| 0100 XXXX | 32-bit displacement | @(exp:32,Rn) | 32-bit register relative indirect |
| 0101 XXXX | — | — | reserve |
| 0110 XXXX | multi-level mode designation | @_ _@(Rn--) | register base multi-level indirect |
| 0111 XXXX | — | — | reserve |
| 1XXX XXXX | — | — | reserve |

(hatched box) · · · bit portion which does not exist in compacted form

(open box) · · · addressing which does not exist in compacted form

X · · · arbitrary value of "0" or "1"

Fig. 8C

```
15                 0
-------------------------------
|E|I|Rn |M|  |XX|D| D4 |   EXP   |
-------------------------------
```

E — end designation

I — indirect designation

Rn — index register number

M — index designation

XX — scale designation

D — desplacement designation

D4 — displacement data
(extended to field of EXP in case of 16 bits and 32 bits)

# Fig. 9A

| POP | 10 01 00 10 | EA |
|---|---|---|

EA (operand designation portion)

| EA | Meaning |
|---|---|
| 00 00 10 01 | 16-bit absolute address |
| 00 00 10 10 | 32-bit absolute address |
| 00 00 10 11 | absolute addition mode |
| 00 00 11 01 | 16-bit displacement program counter, relative |
| 00 00 11 10 | 32-bit displacement program counter, relative |
| 00 00 11 11 | program counter relative addition mode |
| 00 01 Rn | register direct |
| 00 10 Rn | 16-bit displacement, register indirect |
| 00 11 Rn | register indirect |
| 01 00 Rn | 32-bit displacement, register indirect |
| 01 10 Rn | register, relative addition mode |

Fig. 9B

PUSH | 10 11 00 10 | EA |

EA (operand designation portion)

| EA | |
|---|---|
| 00 00 10 01 | 16-bit absolute address |
| 00 00 10 10 | 32-bit absolute address |
| 00 00 10 11 | absolute addition mode |
| 00 00 11 00 | immediate |
| 00 00 11 01 | 16-bit displacement, program counter, relative |
| 00 00 11 10 | 32-bit displacement, program counter, relative |
| 00 00 11 11 | program counter, relative, addition mode |
| 00 01 Rn | register direct |
| 00 10 Rn | 16-bit displacement, register indirect |
| 00 11 Rn | register indirect |
| 01 00 Rn | 32-bit displacement, register indirect |
| 01 10 Rn | register relative, addition mode |

Fig. 10

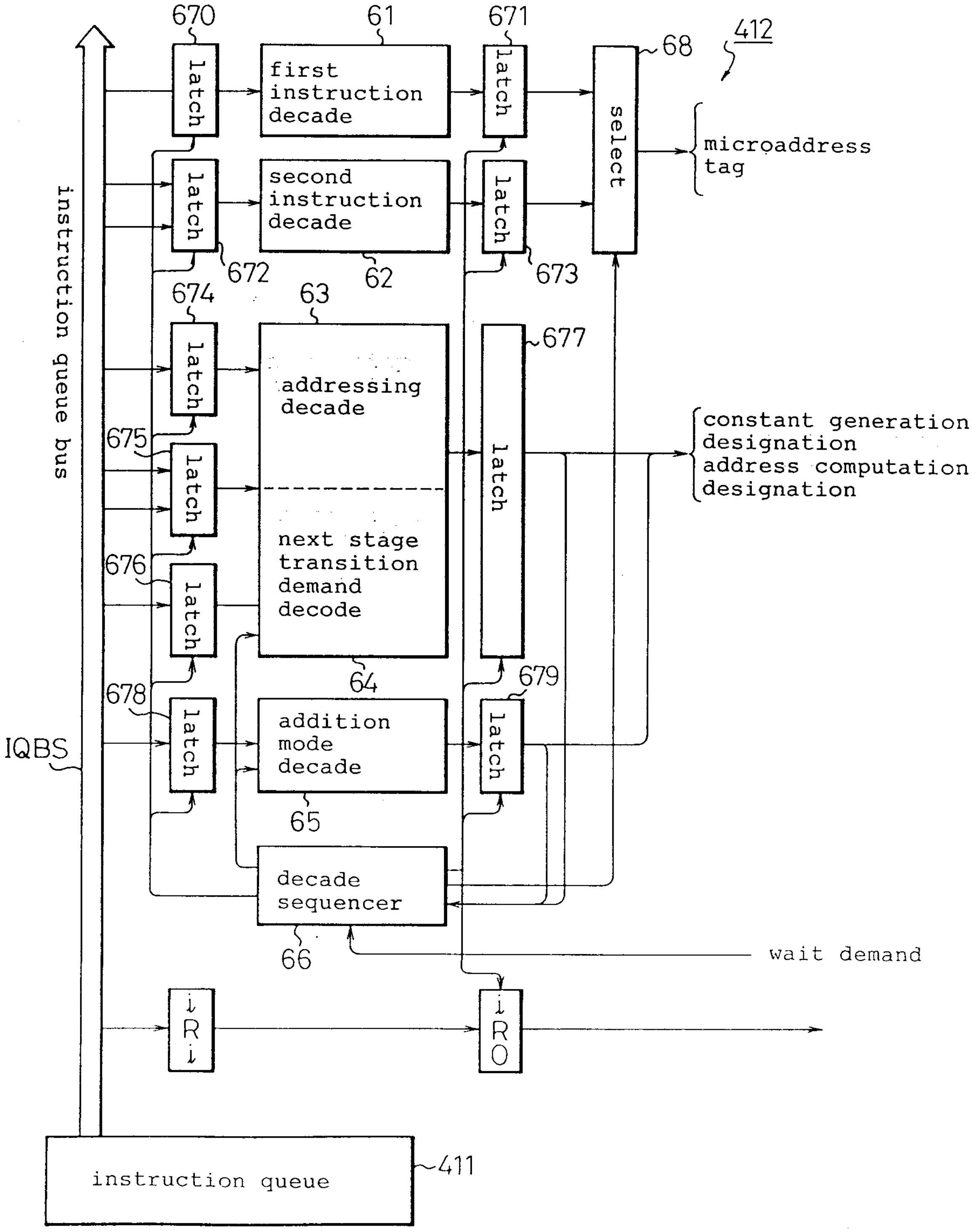
670
61
671
68
412
latch
first instruction decade
latch
select
microaddress tag
latch
second instruction decade
latch
672
62
673
instruction queue bus
674
63
677
latch
addressing decade
675
latch
next stage transition demand decode
latch
constant generation designation address computation designation
676
latch
64
679
678
latch
addition mode decade
latch
IQBS
65
decade sequencer
66
wait demand
IR
IRO
instruction queue
411

Fig.11

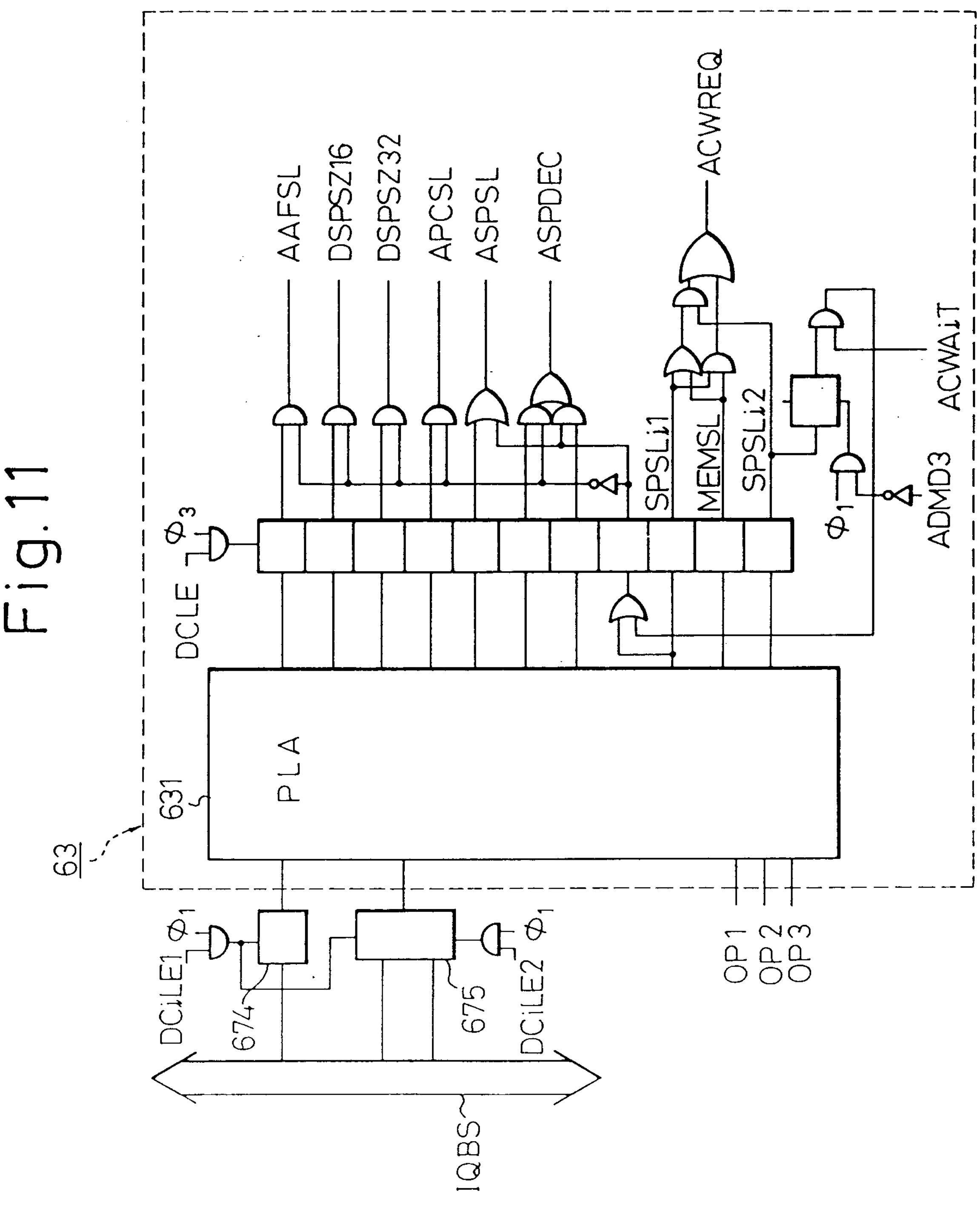
63
631
PLA
DCLE
Φ3
AAFSL
DSPSZ16
DSPSZ32
APCSL
ASPSL
ASPDEC
ACWREQ
SPSLi1
MEMSL
SPSLi2
Φ1
ADMD3
ACWAiT
DCiLE1
Φ1
674
675
DCiLE2
Φ1
OP1
OP2
OP3
IQBS

Fig.12

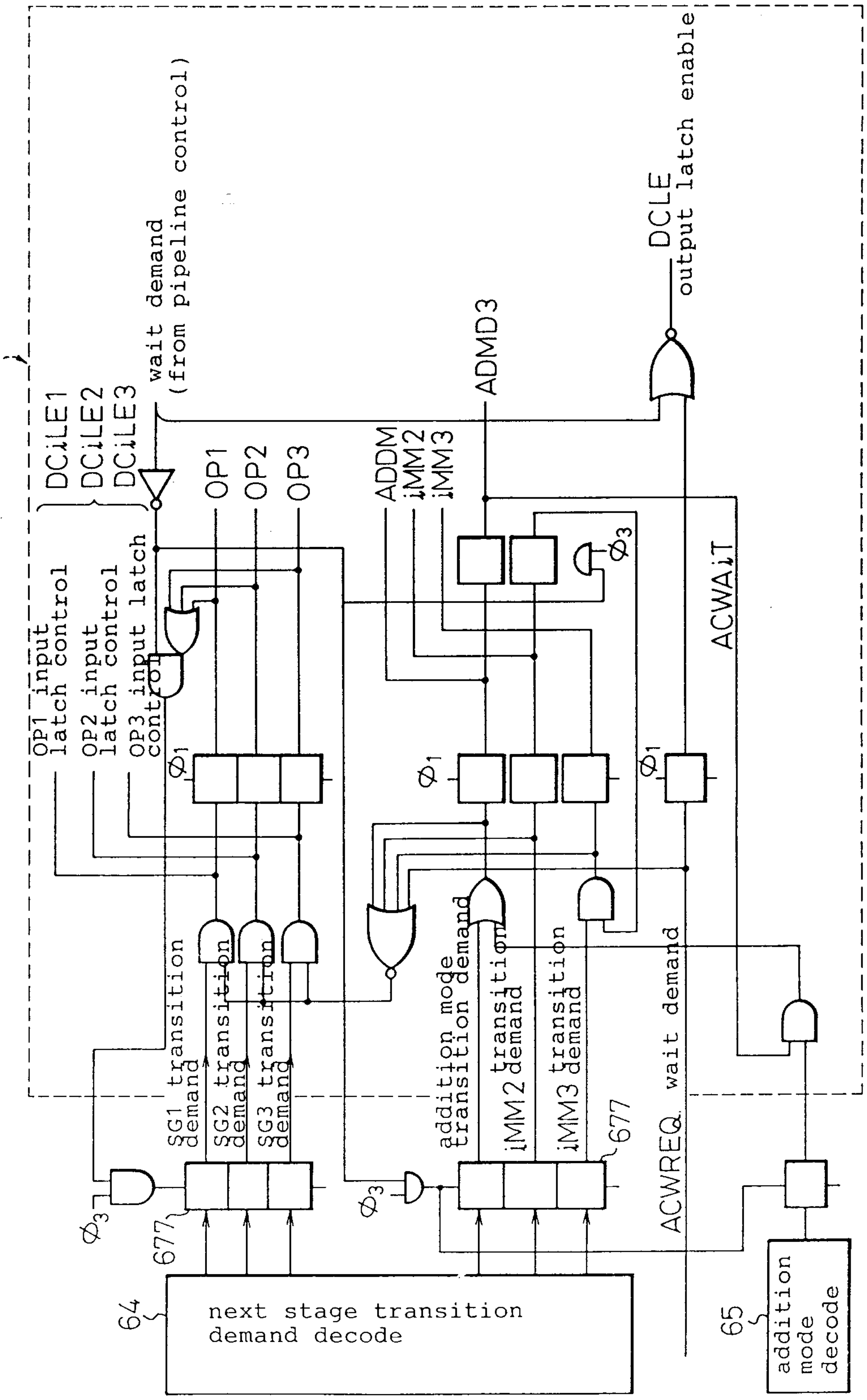
66
DCiLE1
DCiLE2
DCiLE3
wait demand
(from pipeline control)
OP1 input latch control
OP2 input latch control
OP3 input latch control
OP1
OP2
OP3
ADDM
iMM2
iMM3
ADMD3
DCLE
output latch enable
ACWAiT
ACWREQ
wait demand
SG1 transition demand
SG2 transition demand
SG3 transition demand
addition mode transition demand
iMM2 transition demand
iMM3 transition demand
677
64
next stage transition demand decode
65
addition mode decode

Fig.13A

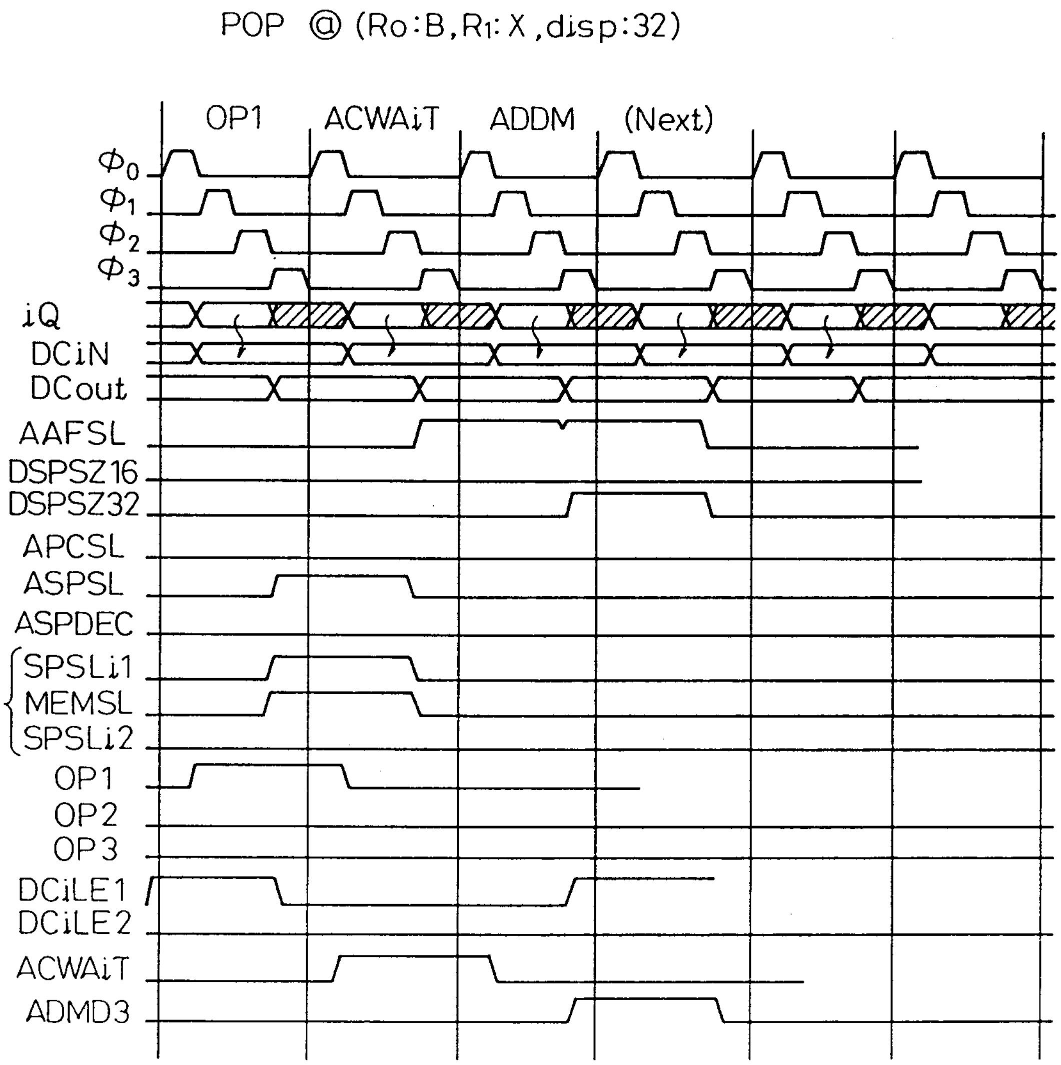
POP @ (Ro:B,R1:X,disp:32)
OP1
ACWAiT
ADDM
(Next)
Φ0
Φ1
Φ2
Φ3
iQ
DCiN
DCout
AAFSL
DSPSZ16
DSPSZ32
APCSL
ASPSL
ASPDEC
SPSLi1
MEMSL
SPSLi2
OP1
OP2
OP3
DCiLE1
DCiLE2
ACWAiT
ADMD3

Fig. 13B

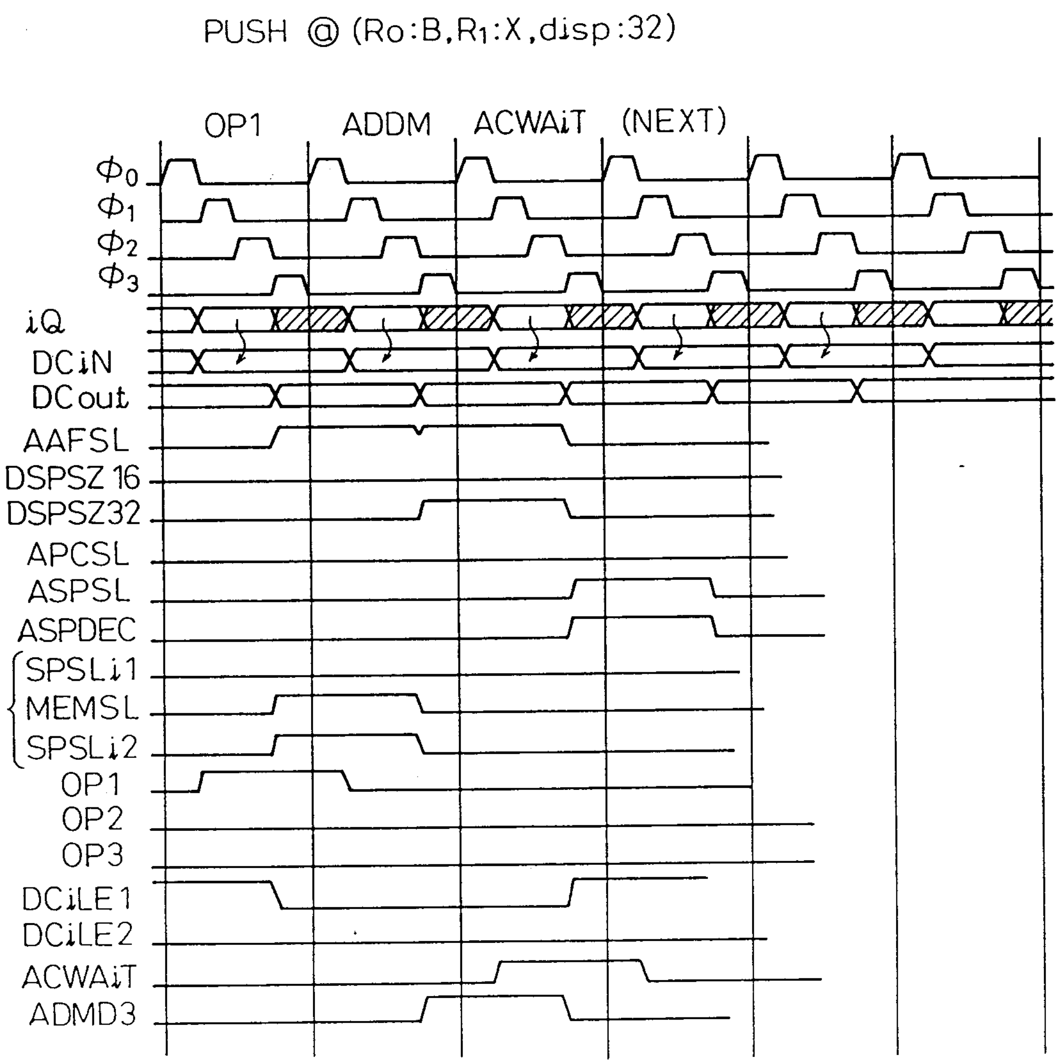
PUSH @ (Ro:B,R1:X,disp:32)
OP1
ADDM
ACWAiT
(NEXT)
Φ0
Φ1
Φ2
Φ3
iQ
DCiN
DCout
AAFSL
DSPSZ16
DSPSZ32
APCSL
ASPSL
ASPDEC
SPSLi1
MEMSL
SPSLi2
OP1
OP2
OP3
DCiLE1
DCiLE2
ACWAiT
ADMD3

# INTERNATIONAL SEARCH REPORT

International Application No PCT/JP91/01460

**I. CLASSIFICATION OF SUBJECT MATTER** (if several classification symbols apply, indicate all) [6]

According to International Patent Classification (IPC) or to both National Classification and IPC

Int. $Cl^5$ G06F9/38, 9/28

**II. FIELDS SEARCHED**

Minimum Documentation Searched [7]

| Classification System | Classification Symbols |
|---|---|
| IPC | G06F9/28, 9/34-9/38 |

Documentation Searched other than Minimum Documentation to the Extent that such Documents are Included in the Fields Searched [8]

| | |
|---|---|
| Jitsuyo Shinan Koho | 1926 - 1990 |
| Kokai Jitsuyo Shinan Koho | 1971 - 1990 |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| Y | JP, A, 02-105937 (Mitsubishi Electric Corp.), April 18, 1990 (18. 04. 90) | 1-15 |
| Y | JP, A, 02-98734 (Mitsubishi Electric Corp.), April 11, 1990 (11. 04. 90) | 1-15 |

* Special categories of cited documents: [10]
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

**IV. CERTIFICATION**

| Date of the Actual Completion of the International Search | Date of Mailing of this International Search Report |
|---|---|
| January 13, 1992 (13. 01. 92) | January 28, 1992 (28. 01. 92) |
| **International Searching Authority** | **Signature of Authorized Officer** |
| Japanese Patent Office | |